# EUROPÄISCHE PATENTSCHRIFT

(11) **EP 1 311 873 B1**
(45) Veröffentlichungstag und Bekanntmachung des Hinweises auf die Patenterteilung: **10.08.2011**
(21) Anmeldenummer: 01957668.5
(22) Anmeldetag: 10.08.2001
(51) Int. Cl.: G01S 17/36

(54) **VERFAHREN UND VORRICHTUNG ZUR ENTFERNUNGSMESSUNG**
METHOD AND DEVICE FOR MEASURING DISTANCES
PROCEDE ET DISPOSITIF DE MESURE DES DISTANCES

(30) Priorität: 25.08.2000 CH 166800
(43) Veröffentlichungstag der Anmeldung: 21.05.2003
(73) Patentinhaber: Leica Geosystems AG, 9435 Heerbrugg (CH)
(72) Erfinder: Kurt, Giger, 9464 Rüthi (CH)
(74) Vertreter: Kaminski Harmann
(86) Internationale Anmeldenummer: PCT/CH2001/000491
(87) Internationale Veröffentlichungsnummer: WO 2002/016964

(56) Entgegenhaltungen:
- EP-A- 0 738 899
- AT-B- 405 105
- DE-A- 19 643 287
- US-A- 5 889 490

## Beschreibung

Die Erfindung betrifft ein Verfahren und eine Vorrichtung zur Entfernungsmessung gemäss dem Oberbegriff des unabhängigen Verfahrensanspruchs 1 bzw. dem Oberbegriff des unabhängigen Vorrichtungsanspruchs 11.

Entfernungsmessgeräte der gattungsgemässen Art sind aus dem Stand der Technik hinlänglich bekannt. Sie weisen einen Entfernungsmessbereich von einigen zehn Metern auf und sind oftmals als Handgeräte ausgebildet. Sie werden hauptsächlich in der Bauvermessung oder im Innenausbau, beispielsweise zum dreidimensionalen Vermessen von Räumen, eingesetzt. Weitere Anwendungsbereiche für Entfernungsmessgeräte sind die geodätische und die industrielle Vermessung. Das Grundprinzip der Entfernungsmessung mit den bekannten Geräten beruht auf der Auswertung einer zeitlichen Veränderung einer Kenngrösse der vom Gerät emitierten und von einem anvisierten Objekt remittierten elektromagnetischen Strahlung. Das Entfernungsmessgerät ist dazu mit einem Sender zur Emission einer intensitätsmodulierten Strahlung ausgestattet. Bei Handgeräten handelt es sich dabei vornehmlich um eine optische Strahlung im sichtbaren Wellenlängenspektrum, um das Anvisieren der Messpunkte zu erleichtern. Die optische Strahlung wird von dem anvisierten Messobjekt remittiert bzw. gestreut und von einem in das Gerät eingebauten Empfänger registriert. Aus der zeitlichen Verzögerung der empfangenen modulierten Strahlung gegenüber der vom Sender emittierten Strahlung ergibt sich die Entfernung zum Messobjekt.

Als Detektoren kommen in den bekannten Entfernungsmessgeräten üblicherweise Pin-Photodioden oder Avalanche-Photodioden zur Wandlung der vom Messobjekt remittierten oder gestreuten Strahlung in elektrische Signale zum Einsatz. Sehr gebräuchlich sind Entfernungsmessgeräte, deren Entferungsbestimmung auf dem Messprinzip der Phasenmessung beruht. Bei derartigen Geräten wird das elektrische Empfangssignal direkt an der Avalanche-Photodiode oder nach einem Vorverstärker mit einer Mischerfrequenz zu einem niederfrequenten Messsignal überlagert. Auf diesem niederfrequenten Signal wird die Phase bestimmt und mit der Phase eines Referenzsignals verglichen. Die Differenz der gemessenen Phase des niederfrequentent Messsignals zur Phase des Referenzsignals ist ein Mass für die Entfernung des Messobjekts.

In der EP-B-0 738 899 sind das Verhalten von Laserdioden für sichtbare Strahlung und die damit verbundenen Genauigkeitsprobleme bei der Entfernungsmessung beschrieben. Zur Verbesserung der Genauigkeit der Entfernungsmessung ist dort vorgeschlagen, die emittierte Laserstrahlung mit Pulsbreiten kleiner 2ns zu modulieren. Die Modulationsfrequenz dieses bekannten Geräts liegt dabei im Bereich von etwa 50 MHz. Bei Pulsen einer Pulsbreite von beispielsweise 1 ns und einer Periodendauer von 20 ns ist bei diesen bekannten Geräten eine Pulsleistung von ca. 20 mW erforderlich, um eine mittlere Leistung von 1 mW zu erreichen, die für die in diesen Geräten verwendete Laserklasse 2 noch erlaubt ist. Die vorgeschlagene Modulationsart ist mit den handelsüblichen 3 mW Lasern noch umsetzbar, ohne durch die erhöhte Pulsleistung gegenüber dem kontinuierlichen 3 mW Betrieb grössere Einbussen in der Lebensdauer der Laser in Kauf nehmen zu müssen. Durch die kurzen Pulse und die hohe Pulsleistung wird eine kurze Kohärenzlänge der Laserstrahlung erzielt. Dies hat eine Reduktion der im allgemeinen granulierten Intensitätsverteilung der von der meist rauhen Oberfläche des anvisierten Messobjekts remittierten Strahlung zur Folge. Die granulierte Intensitätsverteilung ist auch unter der Bezeichnung Speckles bekannt und beeinflusst die erreichbare Messgenauigkeit. Durch die Reduktion der Speckles in der auf den Detektor fallenden remittierten Messstrahlung ist eine Messgenauigkeit im mm Bereich erzielbar.

Eine Möglichkeit der Verbesserung der bestehenden Verfahren und Vorrichtungen besteht darin, die Modulationsfrequenz der Messstrahlung noch weiter zu erhöhen. Bei höheren Frequenzen wird die Signalsteilheit im Nulldurchgang grösser und damit das Zeitintervall Δt, während dessen das Eigenrauschen den Signalpegel beeinträchtigt, verkürzt. Die Verkürzung des Zeitintervalls hat jedoch den Nachteil, dass der Messbereich, innerhalb dessen die Entfernung mit der geforderten Genauigkeit bestimmbar ist, verringert wird. Während bei einer Modulationsfrequenz von 50 MHz eine Distanz von 3 m mit der geforderten Genauigkeit ausmessbar ist, sind es bei einer Frequenz von biespielsweise 400 MHz nur mehr 37,5 cm. Bei Entfernungsmessgeräten auf der Basis der Phasenmessung werden zusätzlich tiefere Modulationsfrequenzen der Messstrahlung benutzt, um die Grobdistanz zu bestimmen. Bei höheren Modulationsfrequenzen für die Feinmessung muss deshalb ein erhöhter Aufwand betrieben werden, um die Grobdistanz zu messen.

Während mit den bekannten Entfernungsmessgeräten bereits gute Ergebnisse erzielbar sind, besteht dennoch der Wunsch nach weiteren Verbesserungen der Leistung gegenüber den bekannten Entfernungsmessgeräten. Ziel derartiger Verbesserungen sind beispielsweise kürzere Messzeiten, genauere Messgeräte, grössere Reichweiten oder auch eine kleinere Bauweise der Entfernungsmessgeräte durch den Einsatz kleinerer Empfangsoptiken. Es soll die Regelung der Laserleistung vereinfacht und im Hinblick auf die Ausbildung des Entfernungsgeräts als Akku- oder Batteriebetriebenes Handgerät der Stromverbrauch des Lasers reduziert werden. Dabei sollen ein Verfahren und eine Vorrichtung zur Entfernungsmessung geschaffen werden, bei dem die Weiterentwicklungen der Halbleitertechnologie berücksichtigbar sind.

Die Lösung dieser Aufgabe besteht in einem Verfahren, welches die im kennzeichnenden Abschnitt des Patentanspruchs 1 angeführten Merkmale aufweist. Eine erfindungsgemäss ausgebildete Vorrichtung zur Durchführung des Verfahrens weist insbesondere die im Kennzeichen des Patentanspruchs 11 angeführten Merkmale auf. Bevorzugte Ausführungsvarianten und/oder Weiterbildungen der Erfindung sind Gegenstand der abhängigen Ansprüche.

Das erfindungsgemässe Verfahren zur Entfernungsmessung beruht auf der Basis der Phasenmessung einer von einem anvisierten Messobjekt remittierten oder gestreuten optischen Messstrahlung. Dabei wird das Messobjekt mit einer von einem Messgerät emittierten, intensitätsmodulierten, optischen Messstrahlung beaufschlagt und die vom Messobjekt remittierte oder gestreute Messstrahlung von einem im Messgerät angeordneten Empfänger detektiert und in elektrische Messsignale umgeformt wird. Die elektrischen Messsignale werden dann mit einem Referenzsignal verglichen, das aus der Detektion und Umformung eines durch eine bekannte Referenzstrecke geleiteten Messlichtanteils generiert wird, um aus der ermittelten Phasendifferenz den Abstand zwischen dem Messgerät und dem Messobjekt zu ermitteln. Die emittierte Messstrahlung wird burstmoduliert und das Messsignal des Empfängers nur während einer von der aktiven Burstdauer abhängigen Zeitspanne ausgewertet.

Die aktive Burstdauer ist dabei diejenige Zeitdauer, während der das Burstsignal anliegt. Die Periode der Abfolge von Bursts und Totzeit, in der kein Modulationssignal anliegt, wird als Messperiode bezeichnet. Das Burstsignal weist einen Duty Cycle auf, der als das Verhältnis der aktiven Burstdauer zur Messperiode in % definiert ist. Dadurch unterscheidet sich die Burstmodulation von einer Pulsmodulation, bei der das Modulationssignal über die Gesamtdauer einer Messperiode quasi kontinuierlich anliegt. Bei der Burstmodulation hingegen liegt das Modulationssignal nur während eines Teils der Messperiode an. Nach der oben angeführten Definition beträgt daher bei der Pulsmodulation der Duty Cycle immer 100%, während der Wert bei der Burstmodulation immer kleiner als 100 %. Die Burstmodulation erfolgt mit einem vorzugsweise rechteckmodulierten Burstsignal. Der rechteckmodulierte Burst führt insgesamt zu einer verringerten Peakleistung. Der Duty Cycle ist unter anderem ein Mass für die erzielbaren Verbesserungen im Signal/Rauschen-Verhältnis (S/N). Das Burstsignal weist eine Modulationsfrequenz auf, die von der Periode des Signalverlaufs innerhalb eines Bursts abhängig ist. In Analogie zur aktiven Burstdauer kann auch eine aktive Modulationsfrequenz definiert werden. Diese ist von der Zeitdauer abhängig, innerhalb der das Signal von Null verschieden ist. Aus dem Verhältnis der aktiven Modulationsfrequenz zur Modulationsfrequenz kann ein Duty Cycle der Modulationsfrequenz in % bestimmt werden.

Durch die Auswertung des Messsignal des Empfängers nur während der aktiven Burstdauer wird das Signal/Rausch-Verhältnis (S/N) verbessert. Dies wird am Beispiel eines Lasers der Laserklasse 2 mit einer maximalen mittleren Ausgangsleistung von 1 mW erläutert. Wird anstelle der bei den bekannten Geräten ausgesandten Messstrahlung mit 2,5 mW Spitzenleistung ein Laserburst von 10% Duty Cycle, mit einer Spitzenleistung von 25 mW, bei einer Modulationsfrequenz von 400 MHz abgestrahlt, so erhält man wiederum einer mittlere Laserleistung von 1 mW. Indem das Empfangssignal nur während der aktiven Burstdauer ausgewertet wird, erhält man zwar das gleichen Gesamtsignal, das entstehen würde, wenn ein kontinuierliches Signal aufsummiert würde. Nachdem jedoch 90% der Periode keine Auswertung erfolgt, werden auch 90% des Rauschens unterdrückt. Daraus resultiert eine Verbesserung des Signal/Rausch-Verhältnisses (S/N) um einen Faktor √(10) bzw. Quadratwurzel (10).

Die Burstmodulation führt auch zu einer Vereinfachung der Regelung der Laserleistung und erlaubt eine Reduktion des Stromverbrauchs. Handelsübliche Laser, wie sie beispielsweise in den bekannten Entfernungsmessgeräten verwendet werden, weisen bei 25°C einen Schwellstrom (Ansteuerstrom) von etwa 40 mA auf, bei dem der Lasereffekt beginnt. Da in dem der Laserdiode nachgeschalteten Laserkollimator Verluste entstehen, ist die Laserleistung an der Laserdiode nicht gleich der für die Laserklasse relevanten Leistung am Laseraustrittsfenster des Geräts. Für ein Gerät der Laserklasse 2 mit einer Ausgangsleistung von 1 mW ist bei 25°C ein Ansteuerstrom von etwa 41mA. erforderlich. Bei einer Ausgangsleistung von 10 mW beträgt der Ansteuerstrom etwa 51 mA. Wird nun für eine mittlere Ausgangsleistung von 1 mW eine Burstmodulation von 10 mW mit einem Duty Cycle von 10% moduliert, so wird ein mittlerer Ansteuerstrom etwa 5,1 mA. Benötigt. Da die Laserspannung bei dem höheren Strom nur um etwa 10% grösser ist, wird in diesem Beispiel eine Reduktion der Ansteuerleistung etwa um einen Faktor 9 erzielt.

Ein weiterer Vorteil der Burstmodulation besteht in der unkritischeren Einregelung der Laserleistung. Bei Geräten der Laserklasse 2 muss gewährleistet sein, dass die mittlere Laserleistung in allen Betriebsbedingungen des Lasers am Laseraustrittsfenster des Geräts 1 mW nicht überschreitet. Die Regelung der Laser erfolgt meist derart, dass einem Gleichstrom ein hochfrequenter Modulationsstrom überlagert wird. Mit dem Gleichstrom wird die Laserleistung geregelt. Bei einer slope efficiency des Lasers von etwa 1 mW/mA muss der Laserstrom bei kontinuierlichem Betrieb und einer gewünschten Leistungsgenauigkeit von 2% bei 1 mA mittlerer Ausgangsleistung auf etwa 20 µA genau eingeregelt werden. Im Fall einer Burstmodulation, wie sie oben angeführt ist, muss der Strom bei gleicher Leistungsgenauigkeit auf nur noch etwa 200 µA Genauigkeit eingeregelt werden. Die erforderliche Genauigkeit des Ansteuerstroms verringert sich um den Faktor des Duty Cycles der Burstmodulation.

Die Burstmodulation kann mit einer aktiven Burstdauer erfolgen, die sich praktisch nur auf einen einzigen Peak beschränkt. Zweckmässigerweise wird die aktive Burstdauer jedoch derart gewählt, dass sich daraus ein Duty Cycle ergibt, der etwa 5% bis etwa 50%, vorzugsweise etwa 10% bis etwa 40% beträgt. Mit den gewählten Grössen für die Burstdauer sind noch ausreichende Verbesserungen gegenüber den bekannten Messverfahren erzielbar.

Für den Effekt der Burstmodulation erweist es sich von Vorteil, wenn die emittierte Messstrahlung mit einer Modulationsfrequenz grösscr 100 MHz und einer Peakleistung grösser 10 mW moduliert wird. Die höheren Spitzenleistungen des Lasers bei der Burstmodulation verkürzen auch die Kohärcnzlängc der emittierten Laserstrahlung, da der Laser bei gleicher Pulsbreite aber höherer Peakleistung durch meherer Moden springt. Dies wirkt sich vorteilhaft auf die Genauigkeit der Messgeräte aus.

In einer Variante des erfindungsgemässen Verfahrens werden die elektrischen Messsignale durch kontinuierliche Überlagerung einer hochfrequenten Mischerfrequenz in niederfrequente Signale umgeformt und nur während der Burstdauer gefiltert. Dabei kann die Mischerfrequenz auch als Burst vorliegen. Die Mischerfrequenz entspricht dabei beispielsweise dem Wert der Modulationsfrequenz des Burstsignals ± dem Frequenzwert des niederfrequenten Signals. Die Ausfilterung des Rauschens kann am analogen niederfrequenten Signal erfolgen. In einer bevorzugten Variante der Erfindung wird die Ausfilterung des Rauschens nach der Digitalisierung des niederfrequenten Signals in einer digitalen Signalverarbeitung durchgeführt. Die Burstdauer wird mit Vorteil zu etwa eineinhalb Periodendauern des niederfrequenten Messsignals gewählt. Das erste Drittel der Burstdauer wird benötigt, damit das Filter einschwingen kann. Das Signal wird dann nur noch während der folgenden zwei Drittel der Burstdauer, die einer vollständigen Periode des niederfrequenten Messsignals entspricht, aufsummiert. Dabei wird die Burstfrequenz mit Vorteil zu der Frequenz des niederfrequenten Messsignals geteilt durch den Faktor des Duty Cycles gewählt.. Trotz der durch den Einschwingvorgang des Filters verlorenen halben Periode des niederfrequenten Messsignals ist immer noch eine ausreichend hohe Verbesserung des Signal/Rauschen-Verhältnisses (S/N) erzielbar, welches durch eine Erhöhung der Abtastfrequenz des A/D Wandlers und eine Optimierung des verwendeten Antialiasingfilters noch verbessert werden kann.

In einer alternativen Ausführungsvariante der Erfindung wird das elektrische Messsignal nur während einer Zeitspanne, die etwa das ein- bis dreifache der Burstdauer beträgt, mit einer hochfrequenten Mischerfrequenz, die als Burst vorliegt und vorzugsweise etwa der Burstfrequenz entspricht, überlagert und in niederfrequente Signale umgeformt. Die niederfrequenten Messsignale werden dann hinsichtlich der Phasenverschiebung ausgewertet. Die gegenüber der Burstdauer vergrösserte Mischdauer trägt dem Umstand Rechnung, dass sich das Empfangssignal in Funktion der zu messenden Distanz zum Sendeburst verschiebt. Die Burstfrequenz wird grösser als die Frequenz des niederfrequenten Signals gewäht. Vorteilhaft an diesem Verfahren ist, dass die Burstfrequenz derart hoch gewählt werden kann, dass sie als Grobfrequenz zur Bestimmung der Grobdistanz verwenbar ist.

Bei einer weiteren Variante der Erfindung wird das vom Empfänger gelieferte, hochfrequente elektrische Messsignal gefiltert und in der nachgeschalteten Signalauswertung mit den Referenzsignalen verglichen und hinsichtlich der Phasenverschiebung ausgewertet, im daraus den gesuchten Abstand zu ermitteln. Die Ausfilterung des Rauschens erfolgt mit Vorteil nach der Digitalisierung der hochfrequenten Signale in der digitalen Signalverarbeitung.

Die erfindungsgemässen Entfernungsmessgeräte haben mit den aus dem nächsten Stand der Technik bekannten Entfernungsmessgeräten die folgenden Merkmale gemeinsam: ein Sender zur Emission einer optischen Strahlung; eine Empfangsoptik für die von einem Messobjekt remittierte oder gestreute optische Messstrahlung; ein der Empfangsoptik nachgeschalteter Empfänger zur Umwandlung der optischen Strahlung in elektrische Messsignale; eine Einrichtung zur Erzeugung einer Referenzstrahlung, die nach Durchlaufen einer bekannten Referenzstrecke in elektrische Referenzsignale umformbar ist; einer Filtereinrichtung zur Ausfilterung von Störsignalen; eine vorzugsweise digitale Signalverarbeitungsanlage zur Untersuchung der Messsignale und der Referenzsignale hinsichtlich ihrer Phasenlage, um daraus den Abstand des Messobjekts zu bestimmen und das Ergebnis dem Anwender verfügbar zu machen. Die Entfernungsmessgeräte nach der Erfindung weisen als Besonderheit auf, dass der Sender mit einem Frequenzsynthesizer verbunden ist, mit dem der emittierten optischen Strahlung eine hochfrequente, Burstmodulierte Modulationsfrequenz einprägbar ist und dass die Auswertung der elektrischen Mess- und Referenzsignale an die Burstdauer gekoppelt ist. Diese grundlegende Ausstattung ist allen Varianten der erfindungsgemässen Entfernungsmessgeräten auf Basis der Phasenmessung gemeinsam. Die optische Referenzstrahlung wird beispielsweise durch einen Strahlteiler erzeugt, der die emittierte optische Strahlung in einen Messstrahl und in einen Referenzstrahl aufspaltet. Dabei ist im Strahlengang des Referenzstrahls ein separater Referenzempfänger angeordnet, der den Referenzstrahl nach dem Durchlaufen der Referenzstrecke in elektrische Referenzsignale umformt. Die optische Strahlung kann aber auch periodisch entweder zum Messobjekt oder durch die Referenzstrecke zum Empfänger geleitet werden. Beispielsweise kann dazu ein periodisch in den Strahlengang einschwenkbarer Umlenkspiegel vorgesehen sein.

Für die Burstmodulation erscheint es zweckmässig, wenn als Sender eine Halbleiterlaserdiode für sichtbare optische Strahlung eingesetzt wird, die vorzugsweise eine Wellenlänge im Bereich von etwa 630 nm bis etwa 650 nm aufweist. Derartige Halbleiterlaserdioden sind mit den erforderlichen mittleren Ausgangsleistungen betreibbar und können insbesondere die benötigten Pulsenergien nahezu ohne Einbusse an Lebensdauer bereitstellen.

Indem die Filtereinrichtung wenigstens ein Hochfrequenzfilter umfasst, welches vor der Signalverarbeitungsanlage im elektrischen Signalpfad angeordnet ist, kann auf eine Umformung in niederfrequente Signale verzichtet werden. Die Ausfilterung des Rauschens erfolgt direkt auf dem hochfrequenten Messsignal bzw. Referenzsignal. Die gefilterten Signale werden dann in der Signalverarbeitungsanlage weiterverarbeitet.

In einer alternativen Ausfühmngsvariante der Erfindung ist im elektrischen Signalpfad des Messsignals und des Referenzsignals jeweils ein Frequenzmischer vorgesehen. Der Frequenzmischer ist vor der Filtereinrichtung angeordnet und dient zur Überlagerung der hochfrequenten elektrischen Mess- bzw. Referenzsignale mit einer hochfrequenten Mischerfrequenz. Durch die Überlagerung der hochfrequenten Messsignale bzw. der Referenzsignale mit der hochfrequenten Mischerfrequenz entstehen niederfrequente Messsignale bzw. Referenzsignale, die in einem oder mehreren nachgeschalteten Niederfrequenzfiltem vom Rauschen befreit werden. Die gefilterten, niederfrequenten Signale werden dann digitalisiert und in der Signalverarbeitungsanlage weiterverarbeitet, um aus den Phasenlagen die Entfernung des Messobjekts zu bestimmen. Als Niederfrequenzfilter kommt vorzugsweise ein Antialiasingfilter zum Einsatz.

Im folgenden wird die Erfindung unter Bezugnahme auf in den Zeichnungen schematisch dargestellte Ausführungsbeispiele näher erläutert. Es zeigen:
Fig. 1 - 3 Diagramme zur Erläuterung von Kenngrössen von Laserdioden; und
Fig. 4 - 6 drei schematische Darstellungen zur Erläuterung der Funktion von Varianten der Erfindung.

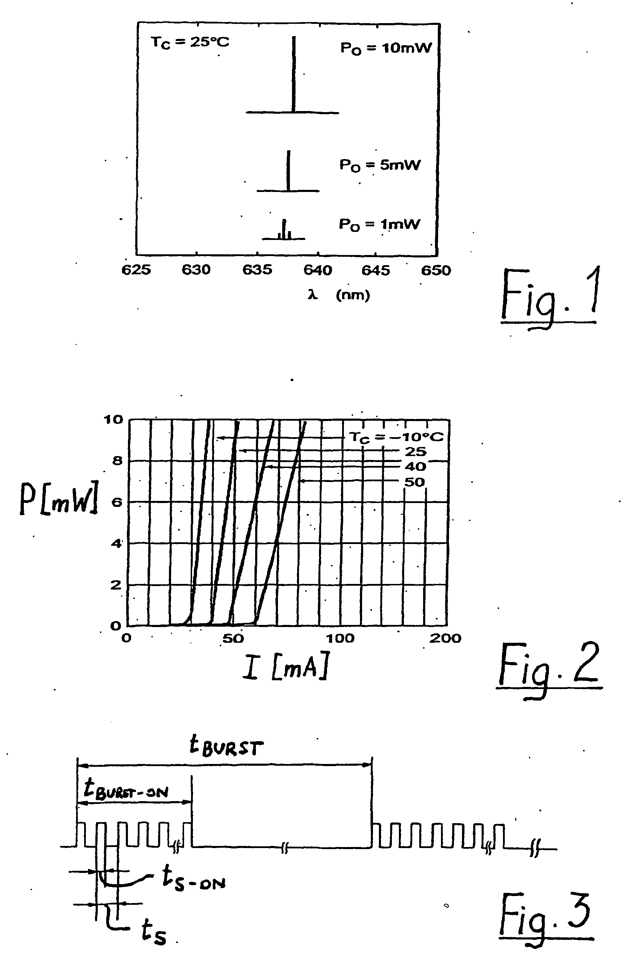

Fig. 1 zeigt die Abhängigkeit der Lichtwellenlänge von der Ausgangsleistung einer Laserdiode. Bei gleicher Pulsbreite und höheren Peakleistungen springt der Laser durch mehrere Moden. Dies verkürzt die Kohärenzlänge des abgestrahlten Laserlichts, was sich positiv auf die Genauigkeit der mit dem Laser ausgestatteten Messgeräte auswirkt. Die Fortschritte in der Halbleitertechnologie erlauben eine Generierung und Verarbeitung von Signalen bei immer höheren Frequenzen. Bei Entfernungsmessgeräten kann diese verbesserte Technologie dazu eingesetzt werden, die Leistung der Geräte zu verbessern. Die Verbesserungen können in kürzeren Messzeiten, genaueren Messgeräten, grösseren Reichweiten oder auch immer kleineren Geräten und damit auch kleineren Empfangsoptiken mit geringeren Empfangssignalpegeln bestehen. Bei höheren Frequenzen weist das Signal im Nulldurchgang eine grössere Steigung auf. Dadurch wird die Zeitspanne, innerhalb der Rauschsignale das eigentliche Messsignal beeinträchtigen, verkürzt.
Fig. 2 gibt die Ansteuercharakteristik eines Halbleiterlasers bei unterschiedlichen Temperaturen wieder. Für eine mittlere Ausgangsleistung von 1 mW weist der Laser bei 25°C einen Anstcuerstrom von etwa 41 mA auf. Infolge der Steilheit der Ansteuercharakteristik beträgt der Anstcuerstrom für eine Ausgangsleistung von 10 mW etwa 51 mA. Die um das zehnfache vergrösserte mittlere Ausgangsleistung des Lasers hat einen nur um etwa 10 mA vergrösserten Ansteuerstrom zur Folge. Die Laserspannung liegt bei dem erhöhten Ansteuerstrom nur um etwa 10% höher.
Fig. 3 dient zur Verdeutlichung von Kenngrössen für die erfindungsgemässe Burstmodulation der emittierten optischen Strahlung. Die Zeitdauer, während der die Burstsignalfolge S anliegt, wird als aktive Burstdauer t_{BURST-ON} bezeichnet. Die Periode der Abfolge von Bursts und Totzeit, in der kein Modulationssignal anliegt, wird als Messperiode t_{BURST} bezeichnet. Das Burstsignal weist einen Duty Cycle auf, der als das Verhältnis der aktiven Burstdauer t_{BURST-ON} zur Messperiode t_{BURST} in % definiert ist. Dadurch unterscheidet sich die Burstmodulation von einer Pulsmodulation, bei der das Modulationssignal über die Gesamtdauer einer Messperiode quasi kontinuierlich anliegt. Bei der Burstmodulation hingegen liegt das Modulationssignal nur während eines Teils der Messperiode an. Nach der oben angeführten Definition beträgt daher bei der Pulsmodulation der Duty Cycle immer 100%, während der Wert bei der Burstmodulation immer kleiner als 100 %. Die Burstmodulation erfolgt mit einem vorzugsweise rechteckmodulierten Burstsignal S. Der rechteckmodulierte Burst S führt insgesamt zu einer verringerten Peakleistung. Der Duty Cycle ist unter anderem ein Mass für die erzielbaren Verbesserungen im Signal/Rauschen-Verhältnis (S/N). Das Burstsignal weist eine Modulationsfrequenz M auf, die von der Periode tₛ des Signalverlaufs innerhalb eines Bursts abhängig ist. In Analogie zur aktiven Burstdauer kann auch eine aktive Modulationsfrequenz M_{ON} = 1/t_{S-ON} defniniert werden. Diese ist von der Zeitdauer abhängig, innerhalb der das Signal von Null verschieden ist. Aus dem Verhältnis der aktiven Modulationsfrequenz zur Modulationsfrequenz kann ein Duty Cycle der Modulationsfrequenz in % bestimmt werden.

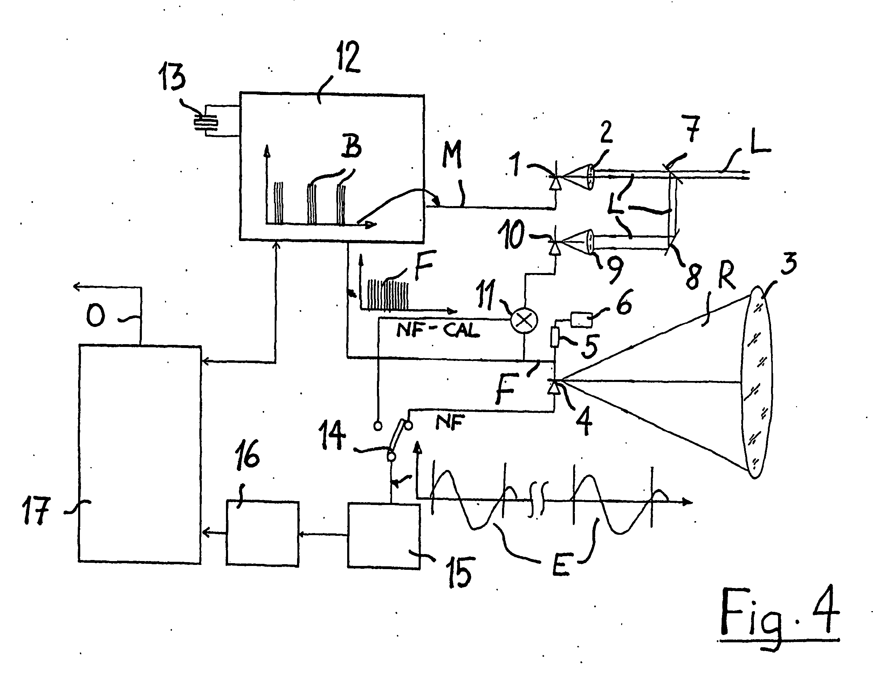

Fig. 4 ist eine schematische Darstellung einer ersten Variante des erfindungsgcmässen Entfernungsmessgeräts. Die von eine Laserquelle 1 emittierte und von einer Kollimationsoptik 2 kollimierte optische Strahlung L wird von einem Strahlenteiler 7 in ein Messstrahlenbündel und in ein Referetizstralilenbündel aufgeteilt. Die Messstrahlung gelangt zu einem Messobjekt, dessen Abstand vom Entfernungsmessgerät gemessen werden soll. Die vom Messobjekt remittierte oder gestreute Strahlung R wird von einer Empfangsoptik 3 gesammelt und auf einen Messempfänger 4 geleitet. Als Messempfänger 4 kommt beispielsweise eine Avalanche Fotodiode zum Einsatz, die über einen Vorwiderstand 5 an einer variablen Vorspannung 6 liegt. Die Referenrstrahlung wird über einen Umlenkspiegel 8 und eine Optik 9 auf einen Referenzempfänger geleitet. Die von der Referenzstrahtung durchlaufene Wegstrecke vom Strahlteiler 7 zum Referenzempfänger 10 bildet die bekannte Referenzstrecke.

Der von der Laserquelle 1 emittierten optische Strahlung ist eine hochfrequente Modulationsfrequenz M aufgeprägt, die von einem Frequenzsynthesizer 12 erzeugt ist, der von einem Referenzquarz 13 angesteuert ist. Durch die hochfrequente Modulationsfrequenz M werden am Empfänger 4 und am Referenzempfänger 10 jeweils hochfrequente Messsignale erzeugt. Der Frequenzsynthesizer 12 erzeugt auch eine Mischerfrequenz F von ähnlich hoher Frequenz, die gleichzeitig über eine Verbindungsleitung einem Frequenzmischer 11 und dem Empfänger 4 zugeführt wird. Der Empfänger 4 für die vom Messobjekt remittierte bzw. gestreute Strahlung ist als Avalanche Fotodiode ausgebildet und arbeitet daher als Direktmischer. Für den Fall, dass anstelle der Avalanche Fotodiode eine PIN-Diode eingesetzt wird, ist ein zusätzlicher Frequenzmischer erforderlich, in dem die Mischerfrequenz F mit den Messsignalen überlagert werden. Durch die Überlagerung mit der Mischerfrequenz F werden die vom Empfänger 4 erzeugten Messsignale in ein niederfrequentes Messsignal NF umgewandelt. In analoger Weise werden die hochfrequenten Referenzsignale im Frequenzmischer 11 mit der Mischerfrequenz F zu einem niederfrequenten Kalibriersignal NF-CAL überlagert. Die Mischerfrequenz F wird dabei mit Vorteil derart ewählt, dass gilt F = (n x M) ± NF. Die Mischerfrequenz F ist somit ein ganzzahliges Vielfaches der Modulationsfrequenz M vermehrt oder vermindert um den Wert des niederfrequenten Signals NF. n ist dabei grösser als 0.

Die niederfrequenten Messsignale NF bzw. Kalibriersignale NF-CAL werden über einen analogen Schalter 14 sequentiell einem Niederfrequenzfilter 15 zugeführt, in dem die hochfrequenten Signalanteile herausgefiltert werden. Vorzugsweise handelt es sich bei dem Filter um ein Anti-Aliasingfiltcr. Die gefilterten und verstärkten Mess- bzw. Referenzsignale werden in einem Analog/Digital Wandler 16 digitalisiert und in einer digitalen Signalverarbeitungseinrichtung 17 hinsichtlich ihrer Phasenlage ausgewertet. Aus der Phasenlage wird auf die die Entfernung des Messobjekts zurückgeschlossen, die als Signal O an eine Ausgabeeinheit weitergeleitet wird.

Die erfindungsgemässe Modifikation des Entfernungsmessgeräts besteht in der vom Frequenzsynthesizer 12 erzeugten Modulationsfrequenz M, die der von der Laserquelle 1 emittierten optischen Strahlung L aufgeprägt wird. Insbesondere handelt es sich dabei um eine Burstmodulation mit Bursts B, deren Burstfrequenz klein gegen die Frequenz der niederfrequenten Messsignale NF ist. Die infolge der Burstmodulation in Bursts B abgegebene Messstrahlung L wird periodisch von längeren Totzeitabschnitten abgelöst. Die Folge sind Messsignale NF bzw. Referenzsignale NF-CAL, die durch lange Abschnitte ohne Messsignale voneinander getrennt sind. Die Auswertung der niederfrequenten Messsignale NF bzw. der Referenzsignale NF-CAL in der digitalen Signalverarbeitungsantage 17 ist gleichfalls durch den Frequenzsynthesizer gesteuert und erfolgt im wesentlichen nur während eines von der Burstdauer abhängigen Messzeitraums E. Die gleichfalls vom Frequenzsynthesizer 12 erzeugte Mischerfrequenz F kann kontinuierlich erzeugt werden. Sie kann aber auch als Burst vorliegen, dessen Frequenz im Bereich der optischen Strahlung aufgeprägten Modulationsfrequenz liegt.

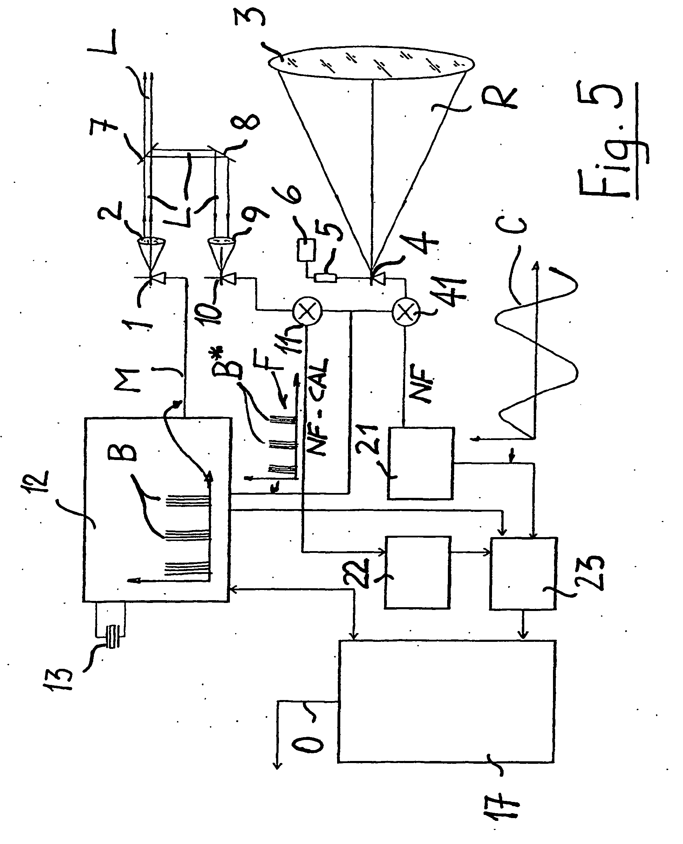

Das in Fig. 5 schematisch dargestellte Ausführungsbeispiel weist im Sende- und Empfangsbereich im wesentlichen den gleichen Aufbau auf wie das Ausführungsbeispiel aus Fig. 4. Analoge Bauteile tragen daher auch die gleichen Bezugszeichen. Die von eine Laserquelle 1 emittierte und von einer Kollimationsoptik 2 kollimierte optische Strahlung L wird von einem Strahlenteiler 7 in ein Messstrahlenbündel und in ein Referenzstrahlenbündel aufgeteilt. Die Messstrahlung gelangt zu einem Messobjekt, dessen Abstand vom Entfernungsmessgerät gemessen werden soll. Die vom Messobjekt remittierte oder gestreute Strahlung R wird von einer Empfangsoptik 3 gesammelt und auf einen Messempfänger 4 geleitet. Als Empfänger kommt beispielsweise eine Avalanche Fotodiode zum Einsatz, die über einen Vorwiderstand 5 an einer variablen Vorspannung 6 liegt. Die Referenzstrahlung wird über einen Umlenkspiegel 8 und eine Optik 9 auf einen Referenzempfänger geleitet. Die von der Referenzstrahlung durchlaufene Wegstrecke vom Strahlteiler 7 zum Referenzempfänger 10 bildet die bekannte Referenzstrecke.

Der von der Laserquelle 1 emittierten optische Strahlung ist eine hochfrequente Modulationsfrequenz M aufgeprägt, die von einem Frequenzsynthesizer 12 erzeugt ist, der von einem Referenzquarz 13 angesteuert ist. Durch die hochfrequente Modulationsfrequenz M werden am Empfänger 4 und am Referenzempfänger 10 jeweils hochfrequente Messsignale erzeugt. Der Frequenzsynthesizer 12 erzeugt auch eine Mischerfrequenz F von ähnlich hoher Frequenz, die gleichzeitig über eine Verbindungsleitung einem Frequenzmischer 11 und dem Empfängers 4 zugeführt wird. Die Mischerfrequenz F wird dem vom Empfänger 4 erzeugten Messsignal in einem zusätzlichen, nachgeschalteten Frequenzmischer 21 überlagert. Durch die Überlagerung mit der Mischerfrequenz M werden die vom Empfänger 4 erzeugten Messsignale in ein niederfrequentes Messsignal NF umgewandelt. In analoger Weise werden die hochfrequenten Referenzsignale im Frequenzmischer 11 mit der Mischerfrequenz M zu einem niederfrequenten Kalibriersignal NF-CAL überlagert.

Die niederfrequenten Messsignale NF und die niederfrequenten Kalibriersignale NF-CAL werden jeweils einem Niederfrequenzfilter 21, 22 zugeführt, in dem die hochfrequenten Signalanteile herausgefiltert werden. Vorzugsweise handelt es sich bei beiden Filtern um Anti-Aliasinglilter. Die gefilterten und verstärkten Mess- bzw. Referenzsignale werden in einem mit zwei Eingängen ausgestatteten Analog/Digital Wandler 23 digitalisiert und in einer digitalen Signalverarbeitungseinrichtung 17 hinsichtlich ihrer Phasenlage ausgewertet. Dabei können die niederfrequenten Messsignale und die Referenzsignale simultan oder auch sequentiell ausgewertet werden. Aus der Phasenlage wird auf die die Entfernung des Messobjekts zurückgeschlossen, die als Signal O an eine Ausgabeeinheit weitergeleitet wird.

Die vom Frequenzsynthesizer 12 erzeugte Modulationsfrequenz M, die der von der Laserquelle 1 emittierten optischen Strahlung L aufgeprägt wird, ist Burstmoduliert. Dadurch wird die Messstrahlung in Bursts B abgegeben, deren Burstfrequenz gross gegenüber der Frequenz der niederfrequenten Messsignale NF ist. Die in Bursts B abgegebene Messstrahlung L wird periodisch von längeren Totzeitabschnitten abgelöst. Die Folge sind Messsignale NF, die durch lange Abschnitte ohne Messsignal voneinander getrennt sind. Die gleichfalls vom Frequenzsynthesizer 12 erzeugte Mischerfrequenz F liegt ebenfalls in Bursts B* vor, und weist eine Frequenz auf, die im Bereich der der optischen Strahlung S aufgeprägten Modulationsfrequenz M liegt. Die Mischung der hochfrequenten Signale des Empfängers 4 und des Referenzempfängers 10 mit der Mischerfrequenz F erfolgt nur während einer von der Burstdauer abhängigen Zeitspanne. Die Auswertung der nach den Niederfrequenzfiltem 21, 22 anliegenden, kontinuierlichen niederfrequenten Signale C erfolgt nach ihrer Digitalisierung in der digitalen Signalverarbeitungsanlage 17. Diese ist mit dem Frequenzsynthesizer 12 gekoppelt und und wertet die Signale während einer Zeitspanne aus, die von der Burstdauer abhängig ist.

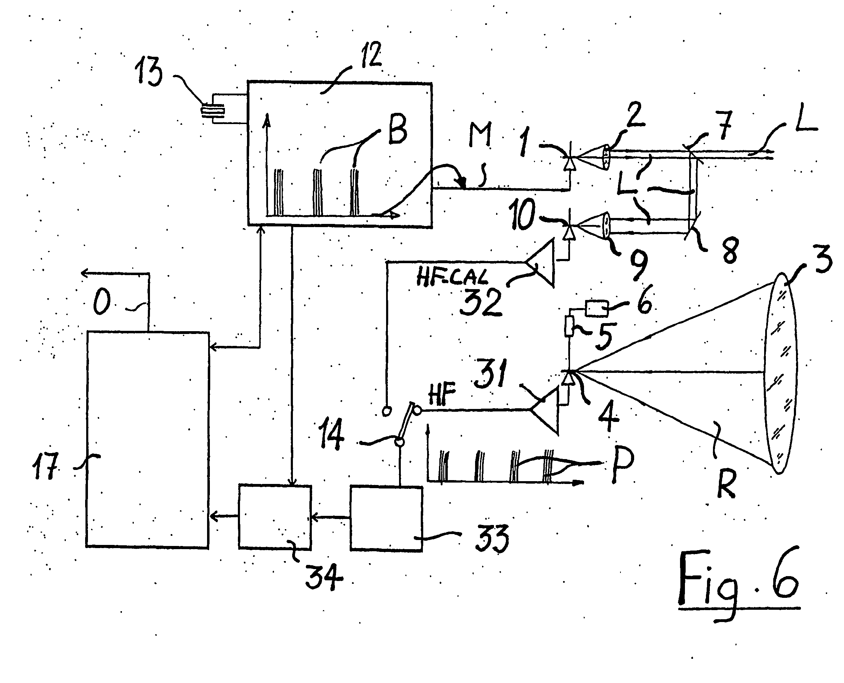

Das in Fig. 6 dargestellte Ausführungsbeispiel der Erfindung verzichtet auf die Umformung der hochfrequenten Messsignale bzw. Referenzsignale in niederfrequente Signale und verarbeitet die hochfrequenten Signale direkt. Der grundsätzliche Aufbau des Sende- und Empfangsbereichs entspricht weitgehend dem der zuvor beschriebenen Ausführungsbeispiele. Daher sind gleiche Bauteile auch mit den gleichen Bezugszeichen versehen. Die von eine Laserquelle 1 emittierte und von einer Kollimationsoptik 2 kollimierte optische Strahlung L wird von einem Strahlenteiler 7 in ein Messstrahlenbündel und in ein Referenzstrahlenbündel aufgeteilt. Die Messstrahlung gelangt zu einem Messobjekt, dessen Abstand vom Entfernungsmessgerät gemessen werden soll. Die vom Messobjekt remittierte oder gestreute Strahlung R wird von einer Empfangsoptik 3 gesammelt und auf einen Messempfänger 4 geleitet. Als Empfänger kommt beispielsweise eine Avalanche Fotodiode zum Einsatz, die über einen Vorwiderstand 5 an einer variablen Vorspannung 6 liegt. Die Referenzstrahlung wird über einen Umlenkspiegel 8 und eine Optik 9 auf einen Referenzempfänger geleitet. Die von der Referenzstrahlung durchlaufene Wegstrecke vom Strahlteiler 7 zum Referenzempfänger 10 bildet die bekannte Referenzstrecke.

Der von der Laserquelle 1 emittierten optische Strahlung ist eine hochfrequente Modulationsfrequenz M aufgeprägt, die von einem Frequenzsynthesizer 12 erzeugt ist, der von einem Referenzquarz 13 angesteuert ist. Die Modulationsfrequenz M ist Burstmoduliert B und bewirkt, dass die optische Strahlung S paketweise abgestrahlt wird. Dem Empfänger 4 dem im Referenzstrahlengang angeordneten Referenzempfänger 10 ist jeweils ein Verstärker 31, 32 nachgeschaltet, der die hochfrequenten Messsignale HF bzw. die Referenzsignale HF-CAL verstärkt. Nachdem die hochfrequenten Mess- bzw. Referenzsignale HF bzw. HF-CAL nicht mit einer Mischerfrequenz überlagert werden, liegen sie entsprechend der Burstmodulation der emittierten optischen Strahlung L ebenfalls in Paketform P an. Die hochfrequenten Messsignale HF bzw. die Referenzsignale HF-CAL werden über einen Schalter 14 sequentiell an ein Hochfrequenzfilter 33 geleitet. Als Hochfrequenzfilter kommt beispielsweise ein Bandpassfilter in Frage. An das Hochfrequenzfilter schliesst ein schneller Analog/Digital Wandler 34 an, der die Mess- bzw. Referenzsignale in digitale Signale umwandelt, die dann in einer digitalen Signalverarbeitungsanlage 17 hinsichtlich ihrer Phasenlage ausgewertet werden. Der A/D Wandler 34 und die digitale Signalverarbeitungsanlage 17 beziehen ihre Taktfrequenz jeweils aus dem Frequenzsynthesizer und in Abhängigkeit von der Burstdauer. Aus der Phasenlage wird die gesuchtet Entfernung O des Messobjekts bestimmt und die Information an eine Ausgabeeinrichtung, beispielsweise eine Anzeige oder einen Drucker weitergeleitet. Die Messsignale HF bzw. die Referenzsignale HF-CAL können auch simultan digitalisiert und ausgewertet werden. In diesem Fall ist für beide Signalpfade ein Hochfrequenzfilter erforderlich. Die Umwandlung der analogen in digitale Signale kann ein einem gemeinsamen A/D Wandler mit zwei Eingängen erfolgen, oder es können separate A/D Wandler vorgesehen sein.

## Patentansprüche

1. Verfahren zur Entfernungsmessung auf der Basis der Phasenmessung einer von einem anvisierten Messobjekt retnittierten oder gestreuten optischen Messstrahhmg (R), bei dem das Messobjekt mit einer von einem Messgerät emittierten, in tensitäfsmodulierten, optischen Messstrahlung beaufschlagt wird und die vom Messobjekt retnittierte oder gestreute Messstrahlung (R) von einem im Messgerät angeordneten Empfänger (4) detektiert und in elektrische Messsignale umgeformt wird, welche mit einem Referenzsignal verglichen werden, das aus der Detektion und Umformung eines durch eine bekannte Referenzstrecke geleiteten Messlichtanteils generiert wird, um aus der ermittelten Phasendifferenz den Abstand zwischen dem Messgerät und dem Messobjekt zu ermitteln, **dadurch gekennzeichnet, dass** die emittierte Messstrahlung burstmoduliert wird und das Messsignal des Empfängers während eines nur von einer aktiven Burstdauer (t_{BURST-ON}) abhängigen Zeitraums ausgewertet wird, hierbei besteht die burstmodulierte emittierte Messstrahlung aus einer begrenzten Anzahl von pulsförmigen Schwingungen, deren Zeitdauer als aktive Burstdauer (t_{BURST-ON}) bezeichnet wird, in Abfolge mit einer Totzeit, in der kein Modulationssignal anliegt.

2. Verfahren nach Anspruch 1, **dadurch gekennzeichnet, dass** die aktive Burstdauer (t_{BURST-ON}) derart gewählt wird, dass ein Duty Cycle von etwa 5% bis etwa 50%, vorzugsweise etwa 10% bis etwa 40% erzielt wird.

3. Verfahren nach Anspruch 1 oder 2, **dadurch gekennzeichnet, dass** die emittierte Messstrahlung mit einer Modulatiortsfrequenz (M) grösser 100 MHz und einer Peakleistung grösser 10 mW moduliert wird.

4. Verfahren nach einem der vorangehenden Ansprüche, **dadurch gekennzeichnet dass** die elektrischen Messsignale durch kontinuierliche Überlagerung einer hochfrequenten Mischerfrequenz (F) in niederfrequente Signale (NF) umgeformt und nur während der aktiven Burstdauer (t_{BURST-ON}) ausgewertet werden.

5. Verfahren nach Anspruch 4, **dadurch gekennzeichnet, dass** die Burstdauer (t_{BURST-ON}) zu etwa eineinhalb Periodendauern des niederfrequenten Messsignals (NF) gewählt wird.

6. Verfahren nach Anspruch 5, **dadurch gekennzeichnet, dass** die Burstfrequenz zu der Frequenz des niederfrequenten Messsignals (NF) geteilt durch den Wert des Duty Cycles des Bursts gewählt wird.

7. Verfahren nach einem der Ansprüche 1-3, **dadurch gekennzeichnet, dass** das elektrische Messsignal während einer Zeitspanne, die etwa das ein- bis dreifache der aktiven Burstdauer (t_{BURST-ON}) beträgt, mit einer hochfrequenten Mischerfrequenz (F) überlagert und in niederfrequente Signale (NF) umgeformt wird, und die niederfrequenten Messsignale hinsichtlich der Phasenverschiebung ausgewertet werden.

8. Verfahren nach einem der Ansprüche 4-7, **dadurch gekennzeichnet, dass** die Mischerfrequenz (F) zu dem n-fachen der Burstfrequenz ± dem Wert des niederfrequenten Messsignals (NF) gewählt wird, wobei n ganzzahlig und grösser als Null ist.

9. Verfahren nach einem der Ansprüche 1-3, **dadurch gekennzeichnet, dass** das vom Empfänger gelieferte hochfrequente elektrische Messsignal während einer Zeitspanne, die etwa das ein- bis dreifache der Burstdauer (t_{BURST-ON}) beträgt, gefiltert und in einer Signalauswertung mit den Referenzsignalen verglichen und hinsichtlich der Phasenverschiebung ausgewertet wird, um daraus den gesuchten Abstand zu ermitteln.

10. Verfahren nach Anspruch 7 oder 9, **dadurch gekennzeichnet, dass** die Burstfrequenz als Grobfrequenz zur Bestimmung der Grobdistanz verwendet wird.

11. Vorrichtung zur Entfernungsmessung nach dem Prinzip der Phasenmessung, mit einem Sender (1) zur Emission einer optischen Strahlung (L), einer Empfangsoptik (3) für die von einem Messobjekt retnittierte oder gestreute optische Messstrahlung (R), einem der Empfangsoptik (3) nachgeschalteten Empfänger (4) zur Umwandlung der optischen Strahlung in elektrische Messsignale, einer Filtereinrichtung (15, 21, 33) zur Ausfilterung von Störsignalen, sowie einer Signalverarbeitungsanlage (17) zum Vergleich der Messsignale mit Referenzsignalen und zur Untersuchung hinsichtlich ihrer Phasenlage, um daraus, den Abstand des Messobjekts zu bestimmen und das Ergebnis dem Anwender verfügbar zu machen, **dadurch gekennzeichnet, dass** der Sender (1) mit einem Frequenzsynthesizer (12, 13) verbunden ist, mit dem der emittierten optischen Strahlung (L) eine hochfrequente, burstmodulierte Modulationsfrequenz (M) einprägbar ist und dass die Auswertung der elektrischen Mess- und Referenzsignale an die aktive Burstdauer (t_{BURST-ON}) gekoppelt ist, hierbei besteht die burstmodulierte Modulationsfrequenz (M) aus einer begrenzten Anzahl von pulsförmigen Schwingungen, deren Zeitdauer als aktive Burstdauer (t_{BURST-ON}) bezeichnet wird, in Abfolge mit einer Totzeit, in der kein Modulationssignal anliegt.

12. Vorrichtung nach Anspruch 11, **dadurch gekennzeichnet, dass** als Sender (1) eine Halbleiterlaserdiode für sichtbare optische Strahlung (L) eingesetzt wird, die vorzugsweise eine Wellenlänge im Bereich von etwa 630 nm bis etwa 650 nm aufweist.

13. Vorrichtung nach Anspruch 11 oder 12, **dadurch gekennzeichnet, dass** im Strahlengang der emittierten optischen Strahlung (L) eine Einrichtung (7) vorgesehen ist, die aus der emittierten optischen Strahlung (L) eine optische Referenzstrahlung erzeugt, welche durch eine bekannte Referenzstrecke leitbar ist, bevor sie in die Referenzsignale umformbar ist.

14. Vorrichtung nach Anspruch 13, **dadurch gekennzeichnet, dass** die Einrichtung (7) zur Erzeugung der Referenzstrahlung ein Strahlteiler ist und im Strahlengang der Referenzstrahlung ein Referenzempfänger (10) angeordnet ist.

15. Vorrichtung nach einem der vorangehenden Ansprüche, **dadurch gekennzeichnet, dass** die Filtereirvichtung (33) wenigstens ein Hochfrequenzfilter umfasst, welches vor der Signalverarbeitungsanlage (17) im elektrischen Signalpfad angeordnet ist.

## Claims

1. Method for measuring distances on the basis of the phase measurement of an optical measurement radiation (R) which is scattered back by a sighted measurement object, in the case of which method an intensity-modulated, optical measurement radiation emitted by a measuring device is applied to the measurement object, and the measurement radiation (R) scattered back by the measurement object is detected by a receiver (4), arranged in the measuring device, and converted into electrical measurement signals which are compared with a reference signal that is generated from the detection and conversion of a measurement light component led through a known reference path, in order to determine the distance between the measuring device and the measurement object from the determined phase difference, **characterized in that** the emitted measurement radiation is burst-modulated, and the measurement signal of the receiver is evaluated during a period dependent only on an active burst duration (t_{BURST-ON}) the burst-modulated emitted measurement radiation consisting here of a limited number of pulsed oscillations, whose time duration is designated as active burst duration (t_{BURST-ON}), followed by a dead time in which no modulation signal is present.

2. Method according to Claim 1, **characterized in that** the active burst duration (t_{BURST-ON}) is selected in such a way that a duty cycle of approximately 5% to approximately 50%, preferably approximately 10% to approximately 40%, is attained.

3. Method according to Claim 1 or 2, **characterized in that** the emitted measurement radiation is modulated with a modulation frequency (M) of higher than 100 MHz, and a peak power of greater than 10 mW.

4. Method according to one of the preceding claims, **characterized in that** the electrical measurement signals are converted into low-frequency signals (NF) by continuously overlaying a high-frequency mixer frequency (F), and evaluated only during the active burst duration (t_{BURST-ON}) -

5. Method according to Claim 4, **characterized in that** the burst duration (t_{BURST-ON}) is selected to be approximately one and a half period durations of the low-frequency measurement signal (NF).

6. Method according to Claim 5, **characterized in that** the burst frequency is selected to be the frequency of the low-frequency measurement signal (NF) divided by the value of the duty cycle of the burst.

7. Method according to one of Claims 1-3, **characterized in that**, during a time interval which is approximately one to three times the active burst duration (t_{BURST-ON}), a high-frequency mixer frequency (F) is superimposed on the electrical measurement signal, which is converted into low-frequency signals (NF), and the low-frequency measurement signals are evaluated with regard to the phase shift.

8. Method according to one of Claims 4-7, **characterized in that** the mixer frequency (F) is selected to be n times the burst frequency ± the value of the low-frequency measurement signal (NF), n being integral and greater than zero.

9. Method according to one of Claims 1-3, **characterized in that** during a time interval which is approximately one to three times the burst duration (t_{BURST-ON}) , the high-frequency electrical measurement signal supplied by the receiver is filtered and is compared in a signal evaluation with the reference signals and evaluated with regard to the phase shift in order to determine the distance being sought therefrom.

10. Method according to Claim 7 or 9, **characterized in that** the burst frequency is used as a coarse frequency for determining the coarse distance.

11. Device for measuring distances by using the principle of phase measurement, having a transmitter (1) for emitting an optical radiation (L), a receiving optics (3) for the optical measurement radiation (R) which is scattered back by a measurement object, a receiver (4), connected downstream of the receiving optics (3), for converting the optical radiation into electrical measurement signals, a filter device (15, 21, 33) for filtering out interfering signals, and a signal processing system (17) for comparing the measurement signals with reference signals and for investigating their phase angle in order to determine therefrom the distance of the measurement object, and to make the result available to the user, **characterized in that** the transmitter (1) is connected to a frequency synthesizer (12, 13) with the aid of which a high-frequency, burst-modulated modulation frequency (M) can be impressed on the emitted optical radiation (L), and **in that** the evaluation of the electrical measurement signals and reference signals is coupled to the active burst duration (t_{BURST-ON}), the burst-modulated modulation frequency (M) consisting here of a limited number of pulsed oscillations, whose time duration is designated as active burst duration (t_{BURST-ON}), followed by a dead time in which no modulation signal is present.

12. Device according to Claim 11, **characterized in that** a semiconductor laser diode for visible optical radiation (L) which preferably has a wavelength in the region of approximately 630 nm to approximately 650 nm is used as transmitter (1).

13. Device according to Claim 11 or 12, **characterized in that** provided in the beam path of the emitted optical radiation (L) is a device (7) which produces from the emitted optical radiation (L) optical reference radiation which can be conducted through a known reference path before it is converted into the reference signals.

14. Device according to Claim 13, **characterized in that** the device (7) for producing the reference radiation is a beam splitter, and a reference receiver (10) is arranged in the beam path of the reference radiation.

15. Device according to one of the preceding claims, **characterized in that** the filter device (33) comprises at least one high-frequency filter which is arranged upstream of the signal processing system (17) in the electrical signal path.

## Revendications

1. Procédé de mesure de distance, sur la base de la mesure de phase d'un rayonnement de mesure (R) optique, réémis ou diffusé par un objet de mesure visé, dans lequel l'objet de mesure est sollicité par un rayonnement de mesure optique, modulé en intensité, émis par un appareil de mesure, et le rayonnement de mesure (R), réémis ou diffusé par l'objet de mesure, est détecté par un récepteur (4), disposé dans l'appareil de mesure, et transformé en signaux de mesure électriques, comparés à un signal de référence, généré à partir de la détection et la transformation d'une fraction de lumière de mesure guidé à travers un parcours de référence connu, pour, à partir de la différence de phase déterminée, déterminer la distance d'espacement entre l'appareil de mesure et l'objet de mesure, **caractérisé en ce que** le rayonnement de mesure déterminé est soumis à une modulation en rafales et le signal de mesure du récepteur est évalué pendant un intervalle de temps dépendant seulement d'une durée de rafale active (t_{BURST-ON}), le rayonnement de mesure émis, soumis à modulation en rafales, étant composé d'un nombre limité d'oscillations à forme d'impulsions, dont la durée est qualifiée de durée de rafale active(t_{BURST-ON}), en succession avec un temps mort, dans lequel aucun signal de modulation n'est appliqué.

2. Procédé selon la revendication 1, **caractérisé en ce que** la durée de rafale active (t_{BURST-ON}) est choisie de manière qu'un rapport cyclique (Duty Cycle) d'à peu près 5 % à à peu près 50 %, de préférence d'à peu près 10 % à à peu près 40 %, soit atteint.

3. Procédé selon la revendication 1 ou 2, **caractérisé en ce que** le rayonnement de mesure émis est modulé avec une fréquence de modulation (M) supérieure à 100 MHz et une puissance de crête supérieure à 10 mW.

4. Procédé selon l'une des revendications précédentes, **caractérisé en ce que** les signaux de mesure électriques sont transformés, par superposition continue d'une fréquence de mélangeur (F) à haute fréquence, en des signaux à basse fréquence (NF) et ne sont évalués que pendant la durée de rafale active (t_{BURST-ON}).

5. Procédé selon la revendication 4, **caractérisé en ce que** la durée de rafale (t_{BURST-ON}) est sélectionnée à des valeurs faisant à peu près une fois et demi la durée de période du signal de mesure à basse fréquence.

6. Procédé selon la revendication 5, **caractérisé en ce que** la fréquence de rafale est sélectionnée à la fréquence du signal de mesure à basse fréquence (NF), divisée par la valeur du rapport cyclique (Duty Cycle) de la rafale.

7. Procédé selon l'une des revendications 1 à 3, **caractérisé en ce que**, pendant un intervalle de temps, valant à peu près une à trois fois la durée de rafale active (t_{BURST-ON}), le signal de mesure électrique est superposé à une fréquence de mélangeur (F) à haute fréquence et transformé en des signaux à basse fréquence (NF), et les signaux de mesure à basse fréquence sont évalués quant au déphasage.

8. Procédé selon l'une des revendications 4 à 7, **caractérisé en ce que** la fréquence de mélangeur (F) est choisie pour valoir n fois la fréquence de rafale ± la valeur du signal de mesure à basse fréquence (NF), n étant un nombre entier et choisi supérieur à zéro.

9. Procédé selon l'une des revendications 1 à 3, **caractérisé en ce que**, pendant un intervalle de temps valant à peu près de un à trois fois la durée de rafale (t_{BURST-ON}), le signal de mesure électrique à haute fréquence fourni par le récepteur est filtré et comparé aux signaux de référence, en une évaluation de signal, et évalué quant au déphasage, pour déterminer à partir de cela la distance recherchée.

10. Procédé selon la revendication 7 ou 9, **caractérisé en ce que** la fréquence de rafale est utilisée comme fréquence grossière pour la détermination de la distance grossière.

11. Dispositif de mesure de distance, selon le principe de la mesure de phase, avec un émetteur (1) pour l'émission d'un rayonnement (L) optique, une optique de réception (3), pour le rayonnement de mesure (R), réémis ou diffusé par l'objet de mesure, un récepteur (4), installé en aval de l'optique de réception (3), pour la transformation du rayonnement optique en signaux de mesure électriques, un dispositif de filtrage (15, 21, 33), pour l'élimination par filtrage des signaux parasites, ainsi qu'une installation de traitement de signal (17), pour la comparaison des signaux de mesure à des signaux de référence et la recherche quant à leur position de phase, pour déterminer à partir de cela la distance de l'objet de mesure et rendre le résultat disponible à l'utilisateur, **caractérisé en ce que** l'émetteur (1) est relié à un synthétiseur de fréquence (12, 13), avec lequel une fréquence de modulation (M) modulé par rafales, à haute fréquence, est susceptible d'être inculquée au rayonnement optique (L) émis, et **en ce que** l'évaluation des signaux de mesure et de référence électrique est couplée à la durée de rafale active (t_{BURST-ON}), la fréquence de modulation (M) modulée en rafales étant composée d'un nombre limité d'oscillations en forme d'impulsions, dont la durée est qualifiée de durée de rafale active (t_{BURST-ON}), en succession avec un temps mort, dans lequel aucun signal de modulation n'est appliqué.

12. Dispositif selon la revendication 11, **caractérisé en ce qu'**est utilisée comme émetteur (1) une diode laser à semi-conducteur pour rayonnement optique (L) visible, présentant de préférence une longueur d'ondes dans la fourchette d'à peu près 630 nm à à peut près 650 nm.

13. Dispositif selon la revendication 11 ou 12, **caractérisé en ce que**, dans le chemin de rayon du rayonnement optique (L) émis, est prévu un dispositif (7), générant, à partir du rayonnement optique (L) émis, un rayonnement de référence optique, susceptible d'être guidé par un parcours de référence connu, avant d'être transformé en les signaux de référence.

14. Dispositif selon la revendication 12, **caractérisé en ce que** le dispositif (7) pour générer le rayonnement de référence est un diviseur de rayon, et un récepteur de référence (10) est disposé dans le chemin de rayon du rayonnement de référence.

15. Dispositif selon l'une des revendications précédentes, **caractérisé en ce que** le dispositif de filtrage (33) comprend au moins un filtre haute fréquence, disposé en amont de l'installation de traitement de signal (17) dans le chemin de signal électrique.
